Europäisches Patentamt

European Patent Office

Office européen des brevets

(11) Veröffentlichungsnummer: **0 458 173 A2**

## (12) EUROPÄISCHE PATENTANMELDUNG

(21) Anmeldenummer: **91107822.8**

(22) Anmeldetag: **15.05.91**

(51) Int. Cl.5: **G02F 1/136**

(30) Priorität: **22.05.90 DE 4016443**

(43) Veröffentlichungstag der Anmeldung:
**27.11.91 Patentblatt 91/48**

(84) Benannte Vertragsstaaten:
**DE FR GB IT NL**

(71) Anmelder: **Daimler-Benz Aktiengesellschaft**
**Postfach 80 02 30**
**W-7000 Stuttgart 80(DE)**

(72) Erfinder: **Schmolla, Wilfried, Dr. Ing.**
**Raabestrasse 21**
**W-6100 Darmstadt(DE)**

(74) Vertreter: **Lertes, Kurt, Dr.**
**AEG-TELEFUNKEN AKTIENGESELLSCHAFT**
**Theodor-Stern-Kai 1**
**W-6000 Frankfurt/Main 70(DE)**

(54) **Flüssigkristallanzeigevorrichtung.**

(57) Gegenstand der Erfindung ist eine Flüssigkristallanzeigevorrichtung mit in Spalten und Zeilen matrixartig angeordneten, auf einem isolierenden Träger (2) verlaufenden Leiterbahnen für die Potentialzufuhr zu Elementen einer strukturierten Elektrode. Zwischen den in den Spalten und Zeilen verlaufenden Leiterbahnen ist eine Isolierschicht (5) angeordnet.

An den Kreuzungsstellen der Zeilen- und Spaltenleiterbahnen (3, 4; 6) sind zumindest die Zeilen- oder Spaltenleiterbahnen (6) in mindestens zwei elektrisch parallel geschaltete Leiterbahnabschnitte (9, 10, 11, 12) aufgeteilt, die sich über die Ränder der gekreuzten Spaltenleiterbahn (3, 4) oder der Zeilenleiterbahn hinaus erstrecken und seitlich neben den Rändern Teilabschnitte (14, 15) mit vermindertem Querschnitt aufweisen.

FIG.2

Die Erfindung bezieht sich auf eine Flüssigkristallanzeigevorrichtung mit in Spalten und Zeilen matrixartig angeordneten, auf einem isolierenden Träger verlaufenden Leiterbahnen für die Potentialzufuhr zu Elementen einer strukturierten Elektrode, wobei zwischen den in den Spalten und Zeilen verlaufenden Leiterbahnen eine Isolierschicht angeordnet ist.

Flüssigkristallanzeigevorrichtungen der vorstehend beschriebenen Art sind beispielsweise aus dem Buch "Liquid Crystal TV Displays, Principles and Applications of Liquid Crystal Displays", KTK Scientific Publishers/Tokyo, D. Reidel Publishing Company, Dordrecht, Boston, Lancaster, Tokyo (1987) bekannt.

In den folgenden weiteren Literaturstellen sind Flüssigkristallanzeigevorrichtungen beschrieben:

a) 1989 Society for Information Display International Symposium, Digest of Technical Papers, Vol. XX;

b) Society for Information Display, Seminar Lecture Notes, Vol. I, May 23 and 27 (1988).

Bei der Herstellung der Isolierschicht auf dem Träger und den auf diesen bereits aufgebrachten Spalten- bzw. Zeilenleiterbahnen lässt es sich vielfach nicht vermeiden, dass leitende Störstellen in der Isolierschicht entstehen. Diese können insbesondere an den Stellen über den Spalten- bzw. Zeilenleiterbahnen auftreten, da dort die Isolierschicht nicht mehr plan zum Träger verläuft.

Nach dem Auftragen der insbesondere aus Siliziumdioxid bestehenden Isolierschicht, werden die Zeilen- bzw. Spaltenleitungen auf der Isolierschicht abgeschieden. Befinden sich im Bereich der Kreuzungsstellen von Zeilen- und Spaltenleitungen leitende Störstellen in der Isolierschicht, dann entsteht jeweils eine Kurzschlussverbindung zwischen den an der Störstelle sich kreuzenden Zeilen- und Spaltenleitungen.

Diese Kurzschlussverbindung verhindert, dass die der Kreuzungsstelle zugeordneten Zeilen- und Spaltenleiterbahnen das angelegte Potential zu den der Kreuzungsstelle zugeordneten Elementen der strukturierten Elektroden weiterleiten, d. h. die entsprechende Elektrodenelemente sind nicht funktionsfähig.

Eine Flüssigkristallanzeigevorrichtung mit einem oder mehreren nicht funktionsfähigen Elektrodenelementen kann die geforderte Anzeige nicht mehr vollständig darstellen. Es ist daher nicht brauchbar. Eine Möglichkeit zur Reparatur solcher fehlerbehafteten Teile besteht darin, eine der Leiterbahnen beiderseits der Kreuzungsstelle mit einem Laser aufzutrennen und eine diskrete Ersatzleitung zu dem aufgetrennten Abschnitt zu verlegen. Eine solche Reparatur ist besonders aufwendig. Ausserdem stört die Ersatzleitung den weiteren Aufbau der Flüssigkristallanzeigevorrichtung.

Der Erfindung liegt die Aufgabe zugrunde, eine Flüssigkristallanzeigevorrichtung der eingangs beschriebenen Gattung so weiterzuentwickeln, dass bei leitenden Störstellen zwischen sich kreuzenden Zeilen- und Spaltenleitungen eine einfache und schnelle Beseitigung eines Kurzschlusses ohne Beeinträchtigung der Funktion der Leiterbahnen, bzw. der Anzeigevorrichtung möglich ist.

Die Aufgabe wird erfindungsgemäss durch die Merkmale des Patentanspruchs 1 gelöst. Bei der im Anspruch 1 beschriebenen Anordnung wird bei einer Störstelle der über die Störstelle verlaufende Leiterbahnabschnitt beiderseits der Störstelle mit Hilfe eines Stroms aufgetrennt. Der Strom bringt den Leiterbahnabschnitt an bestimmten Stellen zum Schmelzen oder Verdampfen, wodurch eine elektrisch isolierende Unterbrechung entsteht. Der verbleibende Leiterbahnabschnitt bzw. mehrere verbleibende parallele Leiterbahnabschnitte, wenn mehr als zwei vorgesehen sind, bewirken, dass die entsprechende Zeilen- oder Spaltenleitung nicht unterbrochen ist.

Bei einer bevorzugten Ausführungsform sind je Kreuzungsstelle in der Spaltenleitung oder der Zeilenleitung mindestens drei parallele Leiterbahnabschnitte vorgesehen. Bei dieser Ausführungsform besteht eine besonders einfache Möglichkeit zur Auftrennung eines kurzgeschlossenen Leiterbahnabschnitts mittels eines Stroms darin, dass jede Spalten- und Zeilenleitung nur an einem Ende mit einer entsprechenden Spannungsquelle verbunden werden muss.

Der gestörte Leiterbahnabschnitt muss nicht eigens von den nicht gestörten Leiterbahnabschnitten unterschieden werden, da das Durchschmelzen beim Anlegen eines entsprechenden Stroms an die Leiterbahnanschlüsse der sich an der Störstelle kreuzenden Leiterbahnen von selbst eintritt.

Eine zweckmässige Ausführungsform besteht darin, das jeder Leiterbahnabschnitt aus mindestens drei in Reihe angeordneten Teilabschnitten besteht, von denen der mittlere, die Kreuzungsstelle überdeckende Teilabschnitt einen grösseren Querschnitt als die beiden anderen, an den mittleren Teilabschnitt beiderseits ausserhalb der Kreuzungsstelle angrenzenden Teilabschnitte aufweist. Die beiden Teilabschnitte mit vermindertem Querschnitt bilden definierte Zonen, an denen der Leiterbahnabschnitt durchschmilzt oder verdampft, wenn ein Kurzschluss zur korrespondierenden Leiterbahn vorhanden ist. Der verminderte Querschnitt lässt sich auf einfache Weise durch eine verringerte Breite im Vergleich mit den anderen Teilabschnitten realisieren.

Ein Verfahren zur Beseitigung von Kurzschlussverbindungen zwischen sich kreuzenden Leiterbahnen bei einer Flüssigkristallanzeigevorrichtung der oben beschriebenen Art besteht darin, dass an die Spaltenleitungen und an die Zeilenleitungen derart Spannung angelegt wird, dass bei einer Kurzschlussverbindung zwischen einer Spaltenleitung und einer Zeilenleitung der über die Spaltenleitung und die Zeilenleitung fliessende Strom an der Kurzschlussverbindung oder an den Teilabschnitten mit vermindertem Querschnitt eine höhere Stromdichte als an den übrigen Stellen des Stromkreises aufweist und die Zeilenleitung an der Kurzschlussverbindung oder an den Teilabschnitten durch Schmelzen oder Verdampfen auftrennt. Wenn nach dem Anlegen der Spannung Stromfluss vorhanden ist, liegt ein Kurzschluss vor. Um diesen zu beseitigen, muss ein so hoher Strom über die Kurzschlussstelle fliessen, dass der betroffene Leiterbahnabschnitt durchschmilzt oder verdampft. Dies kann durch Verbinden der Leiterbahnanschlüsse mit einer Spannungsquelle geschehen, die durch einen entsprechenden Innenwiderstand einen für das Schmelzen oder Verdampfen ausreichend hohen Strom zur Verfügung stellt. Es ist auch möglich, zuerst durch eine Widerstandsmessung Kurzschlüsse festzustellen und dann einen Strom zum Durchschmelzen über die von Störstellen betroffenen Leiterbahnen zu schicken.

Bei zwei parallelen Leiterbahnabschnitten in den Zeilenleitungen werden Zeilenleitungen an beiden Enden mit jeweils einem Pol gleicher Polarität zweier Spannungsquellen und Spaltenleitungen mit dem anderen Pol der beiden Spannungsquellen gemeinsam verbunden, wodurch eine Auftrennung an der Kurzschlussstelle oder an den Stellen mit geringerem Querschnitt auftritt, ohne dass der kurzschlusslose Leiterbahnabschnitt beeinträchtigt wird.

Zweckmässigerweise werden alle Leiterbahnanschlüsse der Spaltenleitungen zugleich mit einem Pol und alle Leiterbahnanschlüsse der Zeilenleitungen zugleich mit dem anderen Pol an eine Spannungsquelle gelegt. Mit dieser Massnahme können mit einem Schritt sogar mehrere Kurzschlüsse an den Spalten- und Zeilenleitungen beseitigt werden. Wenn mehr als zwei Leiterbahnabschnitte vorhanden sind, genügt es, die Spalten- und Zeilenleitungen je an einem Ende an Spannung zu legen.

Die Erfindung wird im folgenden anhand eines in einer Zeichnung dargestellten Ausführungsbeispiels näher beschrieben, aus dem sich weitere Einzelheiten, Merkmale und Vorteile ergeben.

Es zeigen

Fig. 1    einen Teil einer Flüssigkristallanzeigevorrichtung mit einem Träger, Spalten- und Zeilenleitungen und einer Isolierschicht im Längsschnitt;

Fig. 2    den in Fig. 1 dargestellten Teil der Flüssigkristallanzeigevorrichtung von oben;

Fig. 3    einen Ausschnit der in Fig. 2 dargestellten Vorrichung nach der Beseitigung einer Störstelle;

Fig. 4    den in Fig. 3 dargestellten Teil im Längsschnitt;

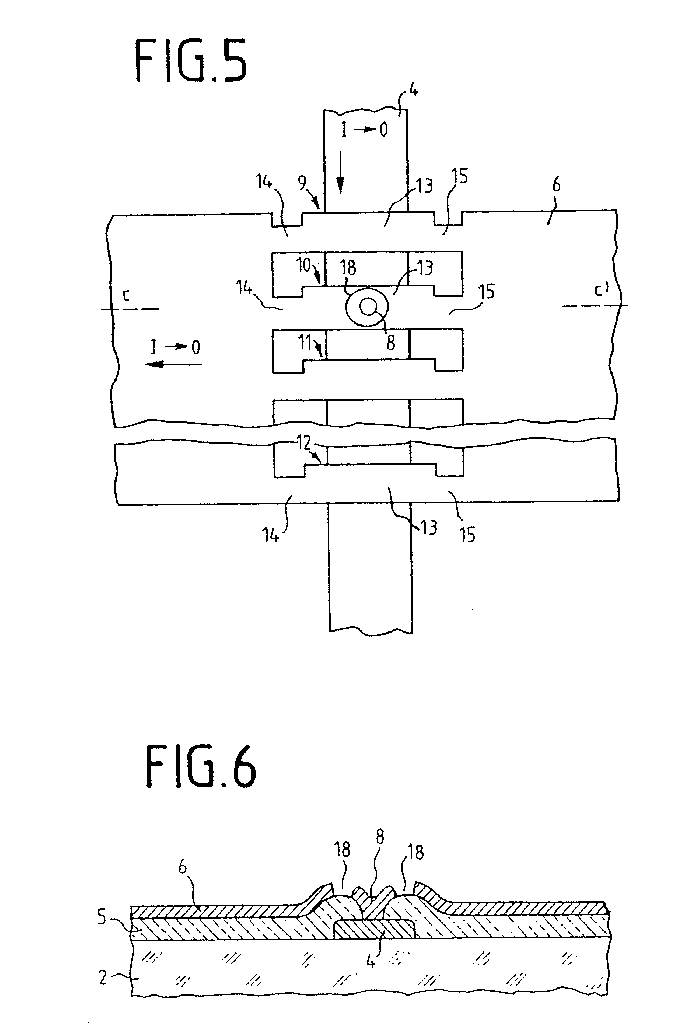

Fig. 5    einen Teil einer Flüssigkristallanzeigevorrichtung nach der Beseitigung eines Kurzschlusses;

Fig. 6    den Teil gem. Fig. 5 im Längsschnitt;

Fig. 7    eine Vorrichtung zur Beseitigung von Kurzschlüssen zwischen sich kreuzenden Zeilen- und Spaltenleitungen einer Flüssigkristallanzeigevorrichtung im Schema;

Fig. 8    ein Ersatzschaltbild für parallele Leiterbahnabschnitte zur Erklärung der Vorgänge bei der Beseitigung eines Kurzschlusses;

Fig. 9    einen Teil einer Flüssigkristallanzeigevorrichtung mit zwei parallelen Leiterbahnabschnitten je Kreuzungsstelle an einer Zeilenleitung in Draufsicht;

Fig. 10    eine Vorrichtung zur Beseitigung von Kurzschlüssen zwischen sich kreuzenden Zeilen- und Spaltenleitungen einer Flüssigkristallanzeigevorrichtung im Schema, wie sie bei zwei parallelen Leiterbahnabschnitten notwendig ist;

Fig. 11    ein Ersatzbild für zwei parallele Leiterbahnabschnitte zur Erklärung der Vorgänge bei der Beseitigung eines Kurzschlusses.

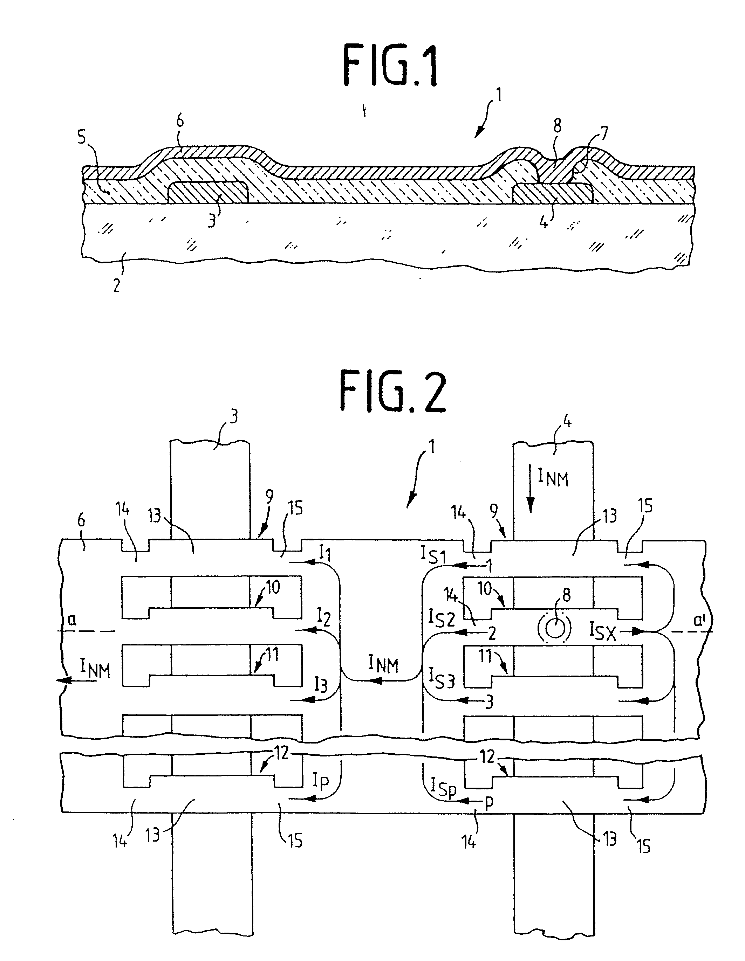

Die Fig. 1 zeigt einen Teil einer Flüssigkristallanzeigevorrichtung mit einem durchsichtigen Träger 2 aus Glas oder Kunststoff oder einem anderen isolierenden Material, auf dem Spaltenleitungen 3, 4 aus einem elektrisch leitenden Material im Abstand voneinander angeordnet sind. Die Spaltenleitungen, von denen in Fig. 1 nur zwei dargestellt sind, bestehen z. B. aus Aluminium. Über dem Träger 2 und den Spaltenleitungen 3, 4 ist eine Isolierschicht 5, z. B. aus Siliziumoxid, angeordnet. Auf dieser Isolierschicht 5 sind im Abstand voneinander Zeilenleitungen 6 angeordnet, die quer zu den Spaltenleitungen 3, 4 verlaufen. In Fig. 1 ist nur eine Zeilenleitung dargestellt. Die Spaltenleitungen 3, 4 und die Zeilenleitungen 6 sind matrixartig angeordnet und bilden die Spannungszufuhrleitungen für nicht dargestellte Schaltelemente, die in der Flüssigkristallanzeigevorrichtung angeordnet sind und die elektrische Verbindung zu zugeordneten Elementen einer strukturierten Elektrode in Abhängigkeit von den Ansteuerpotentialen auf der jeweils zugeordneten Spalten- und Zeilenleitung herstellen. Die Elemente der strukturierten Elektrode sind ebenfalls nicht dargestellt. Je nach der Stellung der Vorrichtung können die Teilabschnitte in den Spaltenleitungen vorgesehen sein.

An der Kreuzungsstelle der Zeilenleitung 6 und der Spaltenleitung 4 ist eine fertigungsbedingte Störstelle 7 in Form einer Lücke in der Isolierschicht 5 vorhanden.

Diese Lücke ist durch Material 8 der Zeilenleitung 6 ausgefüllt, wodurch eine Kurzschlussverbindung zwischen der Spalten- und der Zeilenleitung 4, 6 vorhanden ist.

Durch eine derartige Kurzschlussverbindung wird die einwandfreie Arbeitsweise der der entsprechenden Kreuzungsstelle zugeordneten Leiterbahnen und Schaltelemente unterbunden, so dass die an die Schaltelemente angeschlossenen Elemente der strukturierten Elektroden nicht an Betriebsspannung gelegt werden können. Es entstehen Spalten- und Zeilenfehler. Um trotz derartiger bei der Fertigung nicht bzw. nur mit unvertretbar hohem Aufwand vermeidbarer Störstellen 7 auf einfache und schnelle Weise den Fehler beseitigen zu können, ist die Flüssigkristallanzeigevorrichtung in ihrem Teil 1 auf die in Fig. 2 dargestellte Art aufgebaut.

Die Zeilenleitung 6 ist an den Kreuzungsstellen mit den Spaltenleitungen 3, 4 in parallele Leiterbahnabschnitte 9, 10, 11, 12 aufgeteilt. In Fig. 2 sind vier Leiterbahnabschnitte 9 bis 12 dargestellt. Es können aber auch mehr oder weniger Leiterbahnabschnitte vorhanden sein. Die Mindestanzahl ist zwei. Bei zwei Leiterbahnabschnitten ist für die Fehlerbeseitigung allerdings ein etwas aufwendigeres Verfahren notwendig als bei mindestens drei Leiterbahnabschnitten.

Die einzelnen Leiterbahnabschnitte 9 bis 12 haben die gleiche Form. Sie bestehen jeweils aus drei in Reihe angeordneten Teilabschnitten 13, 14, 15. In Fig. 2 sind nur die Teilabschnitte 13, 14, 15 einiger Leiterbahnabschnitte 9 bis 12 mit den Bezugsziffern für die Teilabschnitte versehen, um die Darstellung nicht unübersichtlich zu machen. Die mittleren Teilabschnitte 13 haben grössere Querschnitte als die seitlich zwischen den mittleren Teilabschnitten und den ungeteilten Bereichen der Zeilenleitungen 6 verlaufenden Teilabschnitte 14, 15, die in Form und Querschnitt gleich ausgebildet sind und, wie in Fig. 2 dargestellt, rechteckig sein können.

Beim Anlegen einer Spannung zwischen der Spaltenleitung 4 und der Zeilenleitung 6 fliesst ein Strom $I_{NM}$ von der Spaltenleitung 4 über das Material 8 zur Zeilenleitung 6. Der Strom ist mit $I_{NM}$ bezeichnet, um anzudeuten, dass er über die N-te Spaltenleitung und die M-te Zeilenleitung fliesst, wobei N die Anzahl der Spaltenleitungen und M die Anzahl der Zeilenleitungen angibt. Der über das Material 8 zur Zeilenleitung 6 fliessende Strom $I_{NM}$ teilt sich in zwei Ströme $I_{SX}$ und $I_{S2}$ auf, die vom Leiterbahnabschnitt 10 nach beiden Seiten abfliessen.

Unter der Annahme, dass die Spannung an das linke Ende der Zeilenleitung 6 angelegt ist, teilt sich der Strom $I_{SX}$ in drei, in Richtung des Anschlusses je über die Leiterbahnabschnitte 9, 11 und 12 fliessende Teilströme $I_{S1}$, $I_{S3}$ und $I_{SP}$ auf, die sich mit dem Strom $I_{S2}$ zum Strom $I_{NM}$ vereinigen. Da sich der Strom $I_{SX}$ in die drei Teilströme $I_{S1}$, $I_{S3}$, $I_{SP}$ aufteilt, ist die Stromdichte in den Leiterbahnabschnitten 9, 11, 12 wesentlich niedriger als im Leiterbahnabschnitt 10. Der Strom $I_{SX}$ ist etwas geringer als der Strom $I_{S2}$. Wird ein so grosser Strom $I_{NM}$ über die Spaltenleitung 4 und die Zeilenleitung 6 geschickt, dass sich der Leiterbahnabschnitt 10 erhitzt, dann nehmen die Teilabschnitte 14, 15 wegen ihrer geringen Querschnitte die höheren Temperaturen an, die die Teilabschnitte 14, 15 entweder gleichzeitig oder nacheinander zum Durchschmelzen oder Verdampfen bringen. Nach dem Durchschmelzen oder Verdampfen ist die Kurzschlussverbindung zwischen der Spaltenleitung 4 und der Zeilenleitung 6 beseitigt, ohne dass die Zeilenleitung 6 unterbrochen ist, d. h. die Flüssigkristallanzeigevorrichtung kann mit dem in Fig. 1 dargestellten Teil 1 betrieben werden.

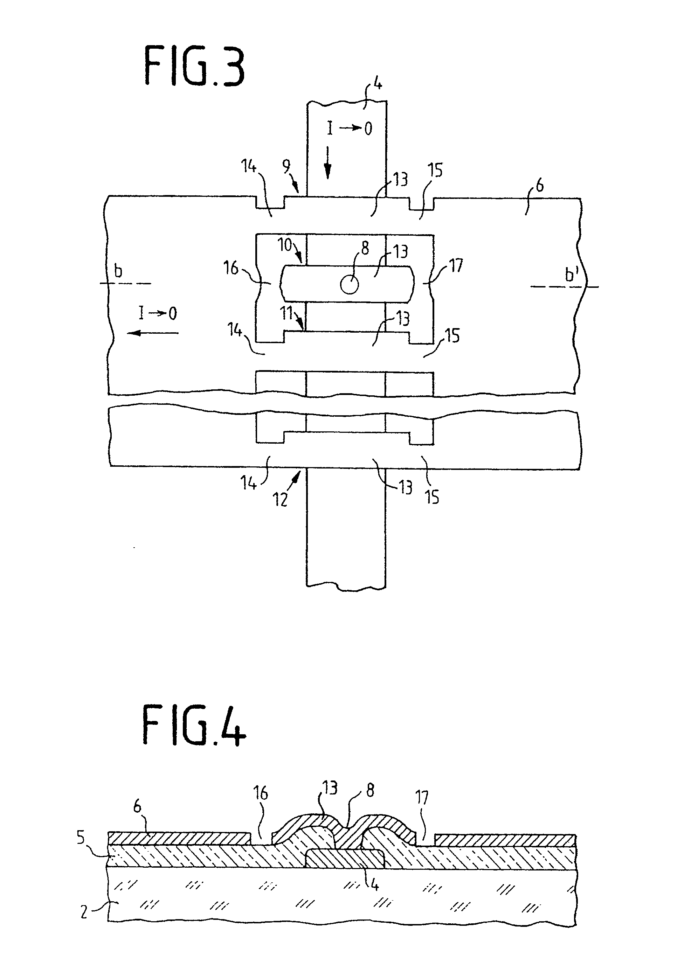

Die Fig. 3 zeigt die Kreuzungsstelle zwischen der Spaltenleitung 4 und der Zeilenleitung 6 mit der Störstelle nach dem Durchbrennen der Teilabschnitte 14, 15. Anstelle der Teilabschnitte 14, 15 sind isolierende Lücken 16, 17 zwischen dem mittleren Teilabschnitt 13 und der vollen Zeilenleitung 6 vorhanden. Die Leiterbahnabschnitte 9, 11 und 12 stellen eine unterbrechungslose Verbindung der Zeilenleitung 6 sicher.

Eine Unterbrechung zwischen der Spaltenleitung 4 und der Zeilenleitung 6 der Kurzschlussverbindung kann auch an anderer Stelle des Leiterbahnabschnitts 10 erfolgen, indem eine hohe Stromdichte an derjenigen Stelle, an der das Material 8 in die Zeilenleitung 6 übergeht, die Leiterbahn durchschmelzen lässt. Hierbei entsteht eine ringförmige Lücke 18 um das Material 8, das von der Zeilenleitung 6 elektrisch isoliert wird.

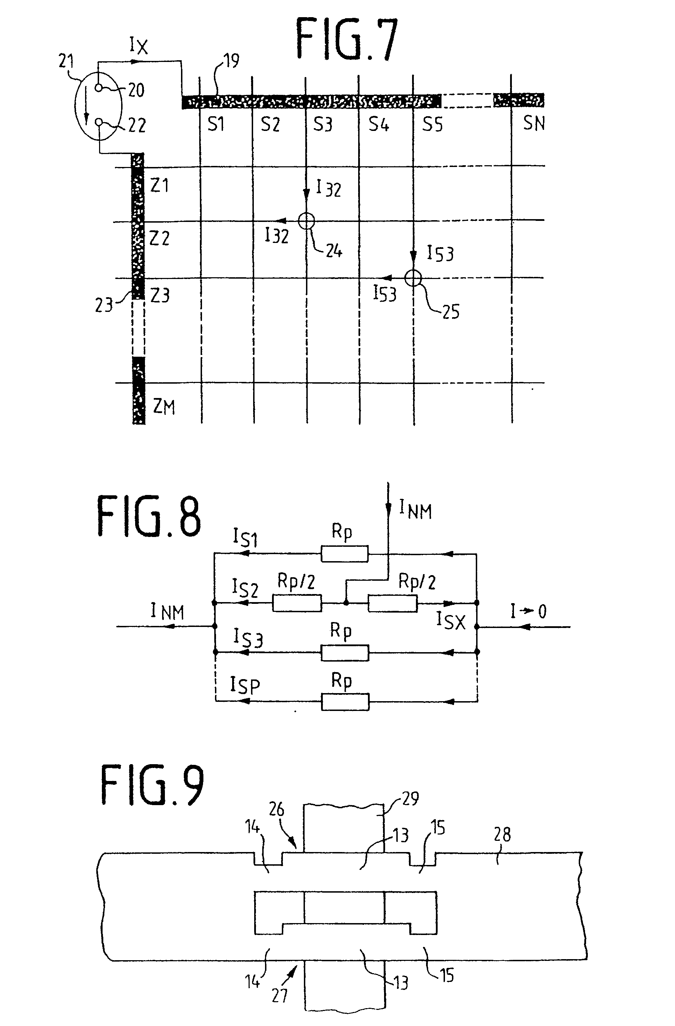

Die Fig. 8 zeigt im Ersatzbild die Widerstände $R_{P9}$, $R_{P11}$ und $R_{P12}$ der parallelen Leiterbahnabschnitte 9, 11, 12. Die Widerstände $R_{P9}$ bis $R_{P12}$ liegen zueinander parallel. In der Leiterbahn 10 fliessen die Ströme $I_{SX}$ und $I_{S2}$ je über Widerstände $R_{P10}/2$, wenn die Kurzschlussverbindung in der Mitte des Teilabschnitts 13 vorhanden ist.

Die Beseitigung störender Kurzschlussverbindungen erfolgt zweckmässigerweise in einem Arbeitsgang nach dem Aufbringen der Zeilenleitungen 6.

Wenn die Zeilenleitungen 6 an den Kreuzungsstellen nur zwei parallele Leiterbahnabschnitte haben, kann die Beseitigung der Kurzschlussverbindung durch Auftrennen der betroffenen Leiterbahnabschnitte beiderseits der Kurzschlussverbindung mittels Laserstrahlen erfolgen. Diese Methode kann auch bei mehr als zwei parallelen Leiterbahnabschnitten angewendet werden, wobei die Kurzschlussverbindungen an den betroffenen Kreuzungsstellen durch eine optische Inspektion vorher festgestellt werden müssen.

Die Beseitigung störender Kurzschlussverbindungen mittels Durchschmelzen oder Verdampfen von Leiterbahnbereichen ist schneller und einfacher als das Durchtrennen, z. B. mittels Laser, da die Kurzschlussverbindungen ohne gesonderten Suchvorgang auf die folgende Art beseitigt werden können (vgl. Fig. 7):

An alle Spaltenleitungen S1, S2, S3, S4, S5 bis SN oder einen Teil davon einer Flüssigkristallanzeigevorrichtung wird zugleich über eine Verbindung 19 ein Pol 20 einer Spannungsquelle 21 gelegt. Der andere Pol 22 der Spannungsquelle 21 wird zugleich über eine Verbindung 23 an alle Zeilenleitungen Z1, Z2, Z3...ZM oder einen Teil davon der Flüssigkristallanzeigevorrichtung angeschlossen. Es sei angenommen, dass jeweils an den Kreuzungsstellen der Spaltenleitung S3 und der Zeilenleitung Z2 sowie der Spaltenleitung S5 und der Zeilenleitung Z3 Kurzschlussverbindungen 24, 25 vorhanden sind.

Die Spannungsquelle 21 treibt über die Kurzschlussverbindungen 24, 25 jeweils Ströme $I_{32}$ und $I_{53}$. Diese Ströme bringen die Leiterbahnbereiche um die Kurzschlussstellen oder die in Fig. 7 nicht dargestellten Teilabschnitte 14, 15 zum Schmelzen und isolieren so die Kurzschlussverbindungen von den übrigen Leiterbahnzonen.

Die Isolation der Kurzschlussverbindungen ist beendet, wenn die Spannungsquelle 21 keinen Strom mehr liefert.

In Fig. 9 ist ein Teil einer Flüssigkristallanzeigevorrichtung dargestellt, die zwei Leiterbahnabschnitte 26, 27 in jeder Zeilenleitung 28 an den Kreuzungsstellen zu den Spaltenleitungen 29 aufweist. Um eine Kurzschlussverbindung zwischen Zeilen- und Spaltenleitung aufzutrennen, muss die Zeilenleitung 28 an beiden Enden an Potential gelegt werden.

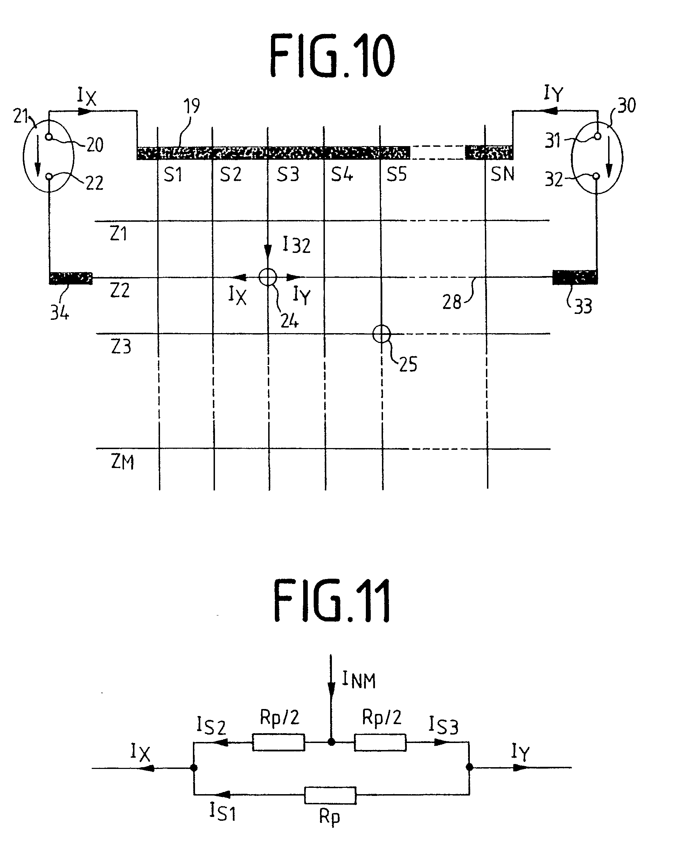

Das Schema einer Vorrichtung zur Beseitigung von Kurzschlussverbindungen bei zwei Leiterbahnabschnitten ist in Fig. 10 dargestellt. Der eine Pol der Spannungsquellen (21) und (30) wird gemeinsam an die Enden der Spaltenleitungen gelegt und der andere Pol jeweils an ein Ende (33) und (34) der Zeilenleitung. Die Ströme $I_{52}$ und $I_{53}$ (vgl. Fig. 11) in den beiden Teilabschnitten 14, 15 mit reduzierten Querschnitten bringen diese zum Schmelzen, ohne dass der parallele Leiterbahnabschnitt beeinträchtigt wird.

**Patentansprüche**

1. Flüssigkristallanzeigevorrichtung mit in Spalten und Zeilen matrixartig angeordneten, auf einem isolierenden Träger verlaufenden Leiterbahnen für die Potentialzufuhr zu Elementen einer strukturierten Elektrode, wobei zwischen den in den Spalten und Zeilen verlaufenden Leiterbahnen eine Isolierschicht angeordnet ist, **dadurch gekennzeichnet,** dass an den Kreuzungsstellen der Zeilen- und Spaltenleiterbahnen (6; 3, 4) zumindest die Zeilen- oder Spaltenleiterbahnen (6; 3, 4) in mindestens zwei elektrisch parallel geschaltete Leiterbahnabschnitte (9, 10, 11, 12) aufgeteilt sind, die sich über die Ränder der gekreuzten Spaltenleiterbahn (3, 4) oder der Zeilenleiterbahn hinaus erstrecken und seitlich neben den Rändern Teilabschnitte (14, 15) mit vermindertem Querschnitt aufweisen.

2. Flüssigkristallanzeigevorrichtung nach Anspruch 1, **dadurch gekennzeichnet,** dass je Kreuzungsstelle in der Spaltenleitung (3, 4) oder der Zeilenleitung (6) mindestens drei parallele Leiterbahnabschnitte (9, 10, 11, 12) vorgesehen sind.

3. Flüssigkristallanzeigevorrichtung nach Anspruch 1 oder 2, **dadurch gekennzeichnet,** dass jeder Leiterbahnabschnitt (9, 10, 11, 12) aus mindestens drei in Reihe liegenden Teilabschnitten (13, 14, 15) besteht, von denen der mittlere, die Kreuzungsstelle überdeckende Teilabschnitt (13), einen grösseren Querschnitt als die beiden anderen, an den mittleren Teilabschnitt beiderseits ausserhalb der Kreuzungsstelle angrenzenden Teilabschnitte (14, 15), aufweist.

4. Flüssigkristallanzeigevorrichtung nach einem oder mehreren der vorhergehenden Ansprüche, **dadurch gekennzeichnet,** dass die Teilabschnitte (14, 15) ausserhalb der Kreuzungsstelle jeweils eine kleinere Breite haben als die mittleren Teilabschnitte (13).

5. Verfahren zur Beseitigung von Kurzschlussverbindungen zwischen sich kreuzenden Leiterbahnen einer Flüssigkristallanzeigevorrichtung gemäss einem oder mehreren der vorhergehenden Ansprüche, **dadurch gekennzeichnet,** dass an die Spaltenleitungen (S1, S2, S3..SN) und an die Zeilenleitungen (Z1, Z2, Z3...ZM) derart Spannung angelegt wird, dass bei einer Kurzschlussverbindung zwischen einer Spalten- und einer Zeilenleitung der über die Spaltenleitung und die Zeilenleitung fliessende Strom an der Kurzschlussverbindung oder an den Teilabschnitten mit vermindertem Querschnitt eine höhere Stromdichte als an den übrigen Stellen des Stromkreises aufweist und die Zeilenleitung oder Spaltenleitung an der Kurzschlussverbindung oder an den Teilabschnitten auftrennt.

6. Verfahren nach Anspruch 5,
   **dadurch gekennzeichnet,**
   dass bei mindestens zwei parallelen Leiterbahnabschnitten in der Zeilenleitung eine erste Spannung (21) zwischen den Spaltenleitungen (S1, S2, S3...SN) und dem einen Ende der Zeilenleitung (ZM) und eine zweite Spannung (30) zwischen den Spaltenleitungen und dem anderen Ende der Zeilenleitung angelegt wird.

7. Verfahren nach Anspruch 5,
   **dadurch gekennzeichnet,**
   dass bei mehr als zwei parallelen Leiterbahnabschnitten (9, 10, 11, 12) alle Spaltenleitungen (S1, S2...SN) zugleich an einen Pol (20) und alle Zeilenleitungen zugleich an den anderen Pol (22) einer Spannungsquelle (21) angelegt werden.

# FIG.1

# FIG.2

# FIG.3

# FIG.4

# FIG.5

# FIG.6

# FIG.7

# FIG.8

# FIG.9

# FIG.10

# FIG.11